# NOUVEAU FASCICULE DE BREVET EUROPEEN

(11) **EP 3 271 617 B2**
(45) Date de publication et mention de la décision concernant l'opposition: **08.02.2023**
(45) Mention de la délivrance du brevet: 04.03.2020
(21) Numéro de dépôt: 16710239.1
(22) Date de dépôt: 17.03.2016
(51) Int. Cl.: F16H 57/023, B02C 15/00, B02C 17/24

(54) **ENTRAÎNEMENT DE BROYEUR AGITATEUR VERTICAL**
ANTRIEB FÜR EINE VERTIKALE RÜHRMÜHLE
DRIVE FOR A VERTICAL STIRRED MILL

(30) Priorité: 17.03.2015 FR 1552179
(43) Date de publication de la demande: 24.01.2018
(73) Titulaire: Compagnie Engrenages et Reducteurs-Messian-Durand, 59400 Cambrai (FR)
(72) Inventeur: LESSARD, Fabrice, 59400 Cambrai (FR)
(74) Mandataire: Lavoix
(86) Numéro de dépôt international: PCT/EP2016/055859
(87) Numéro de publication internationale: WO 2016/146774

(56) Documents cités:
- EP-A1- 1 757 839
- DE-A1- 1 557 107
- DE-A1- 3 226 816
- DE-A1- 3 523 378
- DE-A1- 19 917 609
- US-A- 4 013 235

## Description

La présente invention concerne un dispositif d'entraînement pour un broyeur agitateur vertical, comme révélé dans EP1757839A.

Plus précisément, l'invention concerne un dispositif d'entraînement du type comportant un carter principal, un moteur et un élément rotatif par rapport au carter principal, autour d'un premier axe vertical, l'élément rotatif étant apte à être entraîné en rotation par le moteur. L'élément rotatif est fixé ou apte à être fixé à un outil de broyage rotatif du broyeur agitateur vertical.

Les broyeurs agitateurs verticaux sont utilisés dans l'industrie minière pour broyer des matières premières. L'outil de broyage, tel qu'une pale hélicoïdale, est mobile en rotation à l'intérieur d'une cuve de broyage.

A l'heure actuelle, la solution utilisée pour les entraînements de très forte puissance met en oeuvre un ensemble moteur à axe vertical, monté sur un réducteur planétaire et situé au-dessus de l'outil de broyage. L'outil de broyage est supporté axialement de manière externe au réducteur, ce dernier ne reprenant que les efforts en rotation.

Un tel broyeur présente un encombrement vertical très important. Il est par conséquent nécessaire de l'héberger dans un bâtiment de grande hauteur et de prévoir des moyens importants pour son installation. L'encombrement vertical complique également les opérations de maintenance et en augmente le coût.

La présente invention a pour but de proposer un dispositif d'entraînement pour un broyeur vertical, permettant un encombrement vertical minimal pour une puissance élevée, notamment supérieure à 746kW (1000 HP). Par ailleurs, le dispositif doit être économique en ce qui concerne sa fabrication et son entretien.

A cet effet, l'invention a pour objet un dispositif d'entraînement du type précité, dans lequel l'élément rotatif comporte un plateau rotatif sensiblement perpendiculaire au premier axe, et le carter principal comprend une butée axiale apte à guider axialement l'élément rotatif et à limiter un déplacement axial vers le bas dudit élément rotatif. Le plateau rotatif est disposé en appui sur la butée axiale, ladite butée axiale étant ainsi apte à reprendre les efforts axiaux s'exerçant sur l'outil de broyage rotatif durant un fonctionnement du broyeur agitateur vertical.

Suivant d'autres aspects avantageux de l'invention, le dispositif d'entraînement comporte l'une ou plusieurs des caractéristiques suivantes, prises isolément ou suivant toutes les combinaisons techniques possibles :
- la butée axiale du carter principal est choisie parmi un palier axial, notamment hydrostatique ou hydrodynamique, et une butée à éléments roulants ;
- le carter principal comprend un palier radial apte à guider radialement l'élément rotatif et à reprendre les efforts radiaux s'exerçant sur l'outil de broyage rotatif durant un fonctionnement du broyeur agitateur vertical ;
- l'élément rotatif comporte en outre une partie cylindrique disposée selon le premier axe, une extrémité supérieure de ladite partie cylindrique étant solidaire du plateau rotatif, une extrémité inférieure de ladite partie cylindrique étant fixée ou apte à être fixée à l'outil de broyage rotatif du broyeur agitateur vertical ;
- l'élément rotatif comporte une couronne dentée de sortie et le dispositif d'entraînement comporte en outre : au moins un pignon d'entraînement engrenant ou apte à engrener avec la couronne dentée de sortie, le ou chaque pignon d'entraînement étant mobile en rotation autour d'un deuxième axe ; et au moins une unité d'entraînement, chaque unité d'entraînement étant adaptée pour entraîner en rotation un pignon d'entraînement, la ou chaque unité d'entraînement comprenant un moteur et un arbre de sortie mobile en rotation autour d'un troisième axe ;
- le dispositif d'entraînement comprend pour chaque pignon d'entraînement un carter secondaire fixé au carter principal, de sorte que les premier et deuxième axes sont positionnés de manière fixe l'un par rapport à l'autre ;
- le ou chaque pignon d'entraînement est relié à l'arbre de sortie de l'unité d'entraînement associé à ce pignon d'entrainement par un dispositif d'accouplement tel que le deuxième et le troisième axes sont sensiblement alignés, ledit dispositif d'accouplement ayant au moins un degré de liberté permettant un désalignement entre le deuxième et le troisième axes lors de la transmission de la rotation de l'arbre de sortie au pignon d'entraînement ;
- le dispositif d'accouplement comporte un système de débrayage pour désaccoupler de manière réversible le pignon d'entraînement et l'arbre de sortie de l'unité d'entraînement ;
- le ou chaque pignon d'entraînement comporte un arbre de pignon monté fixe par rapport à l'arbre de sortie de l'unité d'entraînement associée ;
- le dispositif d'entraînement comprend plusieurs pignons d'entraînement, chaque pignon étant associé à une unité d'entraînement, lesdits pignons d'entraînement et unités d'entraînement étant répartis angulairement autour du premier axe.

L'invention se rapporte en outre à un broyeur vertical comprenant un outil de broyage rotatif par rapport à une cuve de broyage selon un axe vertical, l'outil de broyage rotatif étant disposé dans la cuve de broyage, ledit broyeur comprenant un dispositif d'entraînement tel que décrit ci-dessus, l'élément rotatif du dispositif d'entraînement étant fixé à une extrémité supérieure de l'outil de broyage rotatif et le carter principal du dispositif d'entraînement étant fixé à la cuve de broyage et disposé au-dessus de ladite cuve. Préférentiellement, l'outil de broyage rotatif est suspendu à l'élément rotatif de sorte que le poids dudit outil de broyage rotatif est intégralement repris par ledit élément rotatif.

L'invention sera mieux comprise à la lecture de la description qui va suivre, donnée uniquement à titre d'exemple non limitatif et faite en se référant aux dessins sur lesquels :
- La figure 1 représente une vue schématique, en section, d'un broyeur agitateur comprenant un dispositif d'entraînement selon un premier mode de réalisation de l'invention ;
- La figure 2 représente une vue schématique, en section, d'un dispositif d'entraînement selon un deuxième mode de réalisation de l'invention ; et
- La figure 3 représente une vue schématique, en section, d'un dispositif d'entraînement selon un troisième mode de réalisation de l'invention.

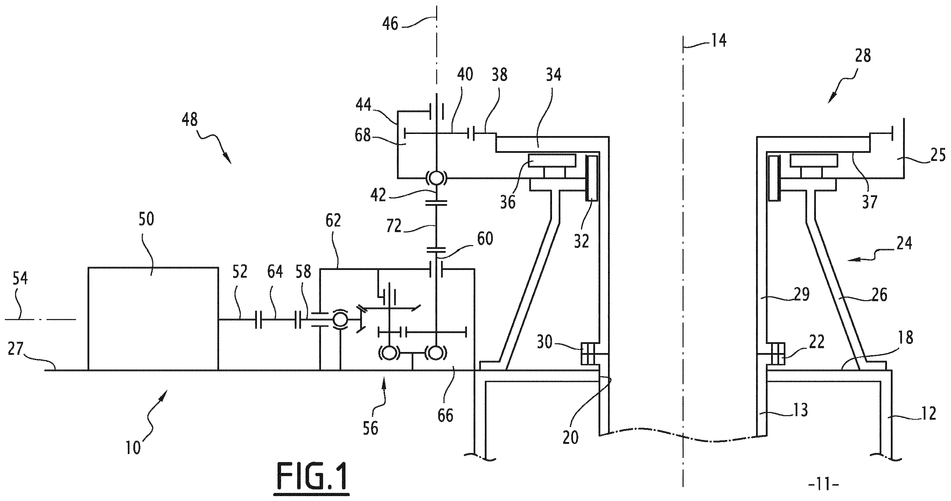

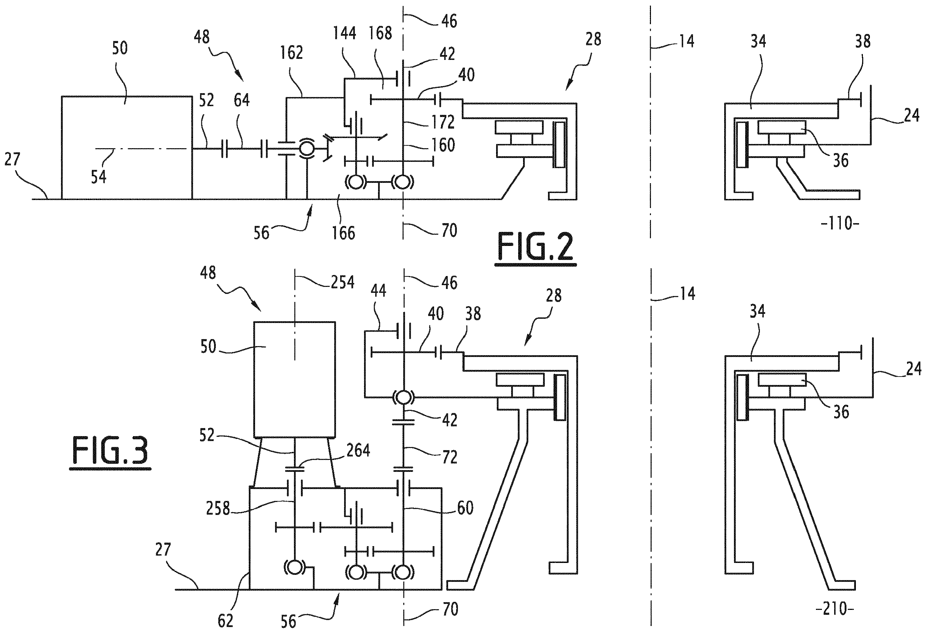

Le dispositif d'entraînement 10, représenté à la figure 1, le dispositif d'entraînement 110, représenté à la figure 2, et le dispositif d'entraînement 210, représenté à la figure 3, sont destinés à faire partie d'un broyeur agitateur vertical 11 partiellement représenté sur la figure 1.

Le broyeur 11 comporte une cuve de broyage 12, ainsi qu'un outil de broyage 13 mobile en rotation par rapport à la cuve de broyage 12 selon un premier axe 14 vertical.

L'outil de broyage rotatif 13 est disposé à l'intérieur de la cuve de broyage 12. L'outil de broyage comporte par exemple une pale hélicoïdale, ou un ensemble de disques de broyage empilés selon le premier axe 14, ou encore des doigts de broyage perpendiculaires au premier axe 14.

Une paroi supérieure 18 de la cuve de broyage 12 comporte un orifice 20 coaxial au premier axe 14. L'outil de broyage 13 passe à travers ledit orifice 20, une extrémité supérieure 22 dudit outil de broyage 13 formant une saillie au-dessus de paroi supérieure 18. L'extrémité supérieure 22 a par exemple la forme d'une bride de fixation.

L'extrémité supérieure 22 de l'outil de broyage rotatif 13 est reliée au dispositif d'entraînement 10, 110, 210. Dans la description qui suit, les éléments communs aux dispositifs d'entraînement 10, 110 et 210 sont désignés par les mêmes numéros de référence.

Le dispositif d'entraînement 10, 110, 210 comprend un carter principal 24, ayant de préférence une forme de révolution par rapport au premier axe 14.

Le carter principal 24 comporte une partie supérieure 25, de forme préférentiellement cylindrique. Le carter principal 24 comporte en outre un support inférieur 26, destiné à reprendre les efforts dynamiques du dispositif d'entraînement 10, 110, 210. Le support inférieur 26 comprend par exemple une paroi cylindrique ou tronconique et une plaque de base, ou des montants. De préférence, la partie supérieure 25 et le support inférieur 26 sont formés d'une pièce.

Le support inférieur 26 est posé sur un fondement 27, par exemple constitué par ou solidaire de la paroi supérieure 18 de la cuve de broyage 12.

Le dispositif d'entraînement 10, 110, 210 comprend en outre un élément rotatif 28, mobile en rotation autour du premier axe 14 par rapport au carter principal 24.

Dans les modes de réalisation des figures 1 à 3, l'élément rotatif 28 comprend une partie cylindrique 29, apte à être assemblée de manière fixe à l'extrémité supérieure 22 de l'outil de broyage rotatif 13. La partie cylindrique 29 est disposée selon le premier axe 14. Une extrémité inférieure 30 de la une partie cylindrique 29 a par exemple la forme d'une bride de fixation et est fixée à l'extrémité supérieure 22 de l'outil de broyage rotatif 13, par exemple au moyen de boulons.

De préférence, l'outil de broyage rotatif 13 est assemblé à l'élément rotatif 28, de sorte que le poids dudit outil de broyage rotatif 13 est repris par ledit élément rotatif 28.

En particulier, une extrémité inférieure (non représentée) de l'outil de broyage rotatif 13 est préférentiellement située à distance des parois de la cuve de broyage 12, non soutenue par lesdites parois. L'outil de broyage 13 est donc suspendu au dispositif d'entraînement 10, 110, 210, le poids dudit outil de broyage 13 étant intégralement repris par ledit dispositif d'entraînement 10, 110, 210.

La partie cylindrique 29 est guidée en rotation par un palier radial 32, solidaire du support inférieur 26 du carter principal 24. Le palier radial 32 est par exemple un roulement radial.

L'élément rotatif 28 comprend en outre un plateau rotatif 34 ayant sensiblement la forme d'un anneau disposé dans un plan horizontal. Le plateau rotatif 34 s'étend radialement vers l'extérieur à partir d'une extrémité supérieure de la partie cylindrique 29. Le plateau rotatif 34 est disposé dans la partie supérieure 25 du carter principal 24.

Le dispositif d'entraînement 10, 110, 210 comprend également une butée axiale 36 disposée au contact d'une paroi inférieure 37 du plateau rotatif 34. La butée axiale 36 est solidaire du carter principal 24.

La butée axiale 36 est apte à guider axialement l'élément rotatif 28 selon le premier axe 14. Par ailleurs, la butée axiale 36 limite un déplacement axial vers le bas dudit élément rotatif 28.

Le plateau rotatif 34 est en appui sur la butée axiale 36. Ainsi, le poids de l'outil de broyage rotatif 13 est intégralement repris par la butée axiale 36 par l'intermédiaire du plateau rotatif 34, et transmis au carter principal 24. De même, tous les efforts axiaux générés par le processus de broyage sont repris par la butée axiale 36.

Par ailleurs, tous les efforts radiaux générés par le processus de broyage sont repris par le palier radial 32 et transmis au carter principal 24.

De préférence, pour les broyeurs à très haute puissance, la butée axiale 36 est un palier à patins hydrostatique ou un palier à patins hydrodynamique. Ces paliers peuvent supporter des efforts très importants.

En variante, la butée axiale 36 est une butée à éléments roulants, par exemple à rouleaux ou à billes.

Le dispositif d'entraînement 10, 110, 210 comprend également une couronne dentée de sortie 38, solidaire d'une périphérie du plateau rotatif 34. La couronne dentée de sortie 38 est disposée dans la partie supérieure 25 du carter principal 24. Préférentiellement, la couronne dentée 38 est à denture externe comme représenté aux figures 1, 2 et 3. Selon une variante de réalisation, la couronne dentée est à denture interne. La couronne dentée 38 est préférentiellement à denture hélicoïdale ; en variante, la couronne dentée 38 est à denture droite.

Le dispositif d'entraînement 10, 110, 210 comprend également un pignon d'entraînement 40. Le pignon d'entraînement 40 est fixé sur un arbre de pignon 42, de préférence sans aucun degré de liberté. En particulier, le pignon d'entraînement 40 n'est pas monté libre en basculement sur l'arbre de pignon 42.

Le ou chaque pignon d'entraînement 40 est apte à engrener avec la couronne dentée 38. Préférentiellement, le dispositif 10, 110, 210 comprend plusieurs pignons d'entraînement 40. Par exemple, le dispositif d'entraînement 10, 110, 210 comprend entre deux et douze pignons d'entraînement 40 répartis autour du premier axe 14. Préférentiellement, les pignons d'entraînement 40 sont répartis angulairement de manière régulière autour de la couronne dentée de sortie 38.

La couronne dentée de sortie 38 et le plateau rotatif 34 sont montés fixes par rapport au carter principal 24 selon des directions radiales par rapport au premier axe 14. En d'autres termes, notamment pendant le fonctionnement, la couronne dentée de sortie 38 et le plateau rotatif 34 sont empêchés de se déplacer radialement par rapport à l'axe 14.

De même, la couronne dentée de sortie 38 et le plateau rotatif 34 sont fixes en rotation perpendiculairement au premier axe 14. En d'autres termes, notamment pendant le fonctionnement, la couronne dentée de sortie 38 et le plateau rotatif 34 sont empêchés de basculer autour d'un centre de rotation disposé sur le premier axe 14. Le seul degré de liberté de la couronne dentée de sortie 38 et du plateau rotatif 34 est donc en rotation autour du premier axe 14.

Le pignon d'entraînement 40, ou chaque pignon d'entraînement 40, est logé dans un carter secondaire, ou boîtier 44, 144. Le ou chaque pignon d'entraînement 40 est mobile en rotation dans son carter secondaire 44, 144 par rapport à un deuxième axe 46.

Le carter secondaire 44, 144 est solidaire du carter principal 24, et plus particulièrement de la partie supérieure 25. Ainsi, le deuxième axe 46 de rotation du pignon d'entraînement 40 est positionné de manière fixe par rapport au premier axe 14 de rotation de la couronne dentée 38.

Selon un mode de réalisation préférentiel, le pignon d'entraînement 40 est logé de manière fixe dans le carter secondaire 44, 144, uniquement guidé par l'intermédiaire de roulements, sans nécessité de réglage de sa position radiale par rapport à son axe de rotation 46.

Selon un mode de réalisation préférentiel, le pignon d'entraînement 40, ou chaque pignon d'entraînement 40, est monté fixe par rapport au carter secondaire 44, 144 selon des directions radiales par rapport au deuxième axe 46. En d'autres termes, notamment pendant le fonctionnement, le pignon d'entraînement 40, ou chaque pignon d'entraînement 40, est empêché de se déplacer radialement par rapport au deuxième axe 46.

De même, selon un mode de réalisation préférentiel, le pignon d'entraînement 40, ou chaque pignon d'entraînement 40, est fixe en rotation perpendiculairement au deuxième axe 46. En d'autres termes, notamment pendant le fonctionnement, le pignon d'entraînement 40, ou chaque pignon d'entraînement 40, est empêché de basculer autour d'un centre de rotation disposé sur le deuxième axe 46. Le seul degré de liberté du pignon d'entraînement 40, ou de chaque pignon d'entraînement 40, par rapport au carter secondaire 44, 144 associé, est donc en rotation autour du deuxième axe 46.

Dans les modes de réalisation des figures 1 à 3, le carter secondaire 44, 144 est fixé de manière permanente au carter principal 24, ou encore le carter secondaire 44, 144 est monobloc avec le carter principal 24. En variante, le carter secondaire est fixé de manière amovible au carter principal, de sorte à pouvoir être démonté.

Le pignon d'entraînement 40, ou chaque pignon d'entraînement 40, est associé à une unité d'entraînement 48 apte à entraîner en rotation ledit pignon d'entraînement. Préférentiellement, l'unité d'entraînement 48 est fixée au fondement 27.

L'unité d'entraînement 48 comprend un moteur rotatif 50 ayant un arbre de moteur 52. Dans le mode de réalisation des figures 1 et 2, l'axe de rotation 54 de l'arbre de moteur 52 est horizontal, soit perpendiculaire au deuxième axe 46 de rotation du pignon d'entraînement 40. Dans le mode de réalisation de la figure 3, l'axe de rotation 254 de l'arbre de moteur 52 est vertical, soit parallèle au deuxième axe 46 de rotation du pignon d'entraînement 40.

L'unité d'entraînement 48 comprend un réducteur de vitesse 56. Le réducteur 56 comprend un arbre d'entrée 58, 258, un arbre de sortie 60, 160 et un carter de réducteur 62, 162.

L'arbre d'entrée 58, 258 et l'arbre de sortie 60, 160 sont montés en rotation sur le carter de réducteur 62, 162. L'arbre d'entrée 58, 258 et l'arbre de sortie 60, 160 n'ont aucun autre degré de liberté par rapport au carter de réducteur 62, 162, notamment pendant le fonctionnement.

L'arbre d'entrée 58, 258 est relié à l'arbre de moteur 52 par un premier accouplement 64, 264, sans l'intermédiaire d'un étage de réduction. Dans le mode de réalisation des figures 1 et 2, l'arbre d'entrée 58 du réducteur 56 est disposé horizontalement. Dans le mode de réalisation de la figure 3, l'arbre d'entrée 258 du réducteur 56 est disposé verticalement.

Dans le mode de réalisation de la figure 3, l'arbre d'entrée 258 est orienté vers le haut et le moteur 50 est positionné au-dessus du réducteur 56. En variante, l'arbre d'entrée est orienté vers le bas et le moteur est positionné au-dessous du réducteur de vitesse.

Dans le mode de réalisation de la figure 2, le carter de réducteur 162 est solidaire du carter principal 24 et du carter secondaire 144. Par exemple, le carter de réducteur 162 est fixé de manière permanente au carter principal 24 et/ou au carter secondaire 144.

En particulier, dans le mode de réalisation de la figure 2, des volumes internes 166, 168 du carter de réducteur 162 et du carter secondaire 144 communiquent l'un avec l'autre.

Au contraire, dans les modes de réalisation des figures 1 et 3, le carter de réducteur 62 et le carter secondaire 44 définissent respectivement des volumes internes 66, 68, distincts et à distance l'un de l'autre.

L'arbre de sortie 60, 160 du réducteur de vitesse 56 est disposé selon un troisième axe vertical 70 de rotation. Préférentiellement, comme représenté aux figures 1 à 3, l'arbre de sortie 60, 160 est positionné sous le pignon d'entraînement 40.

L'arbre de sortie 60, 160 est relié à l'arbre de pignon 42 de sorte à entraîner en rotation le pignon d'entraînement 40.

Dans le mode de réalisation de la figure 2, l'arbre de pignon 42 du pignon d'entraînement 40 est fixe par rapport à l'arbre de sortie 160. Par exemple, l'arbre de pignon 42 et l'arbre de sortie 160 sont formés d'une pièce. Ainsi, le deuxième axe 46 et le troisième axe 70 sont confondus.

De plus, une jonction 172 entre l'arbre de sortie 160 et l'arbre de pignon 42 est contenue dans le volume interne 166, 168 défini par le carter de réducteur 162 et le carter secondaire 144.

Dans les modes de réalisation des figures 1 et 3, le pignon d'entraînement 40, et plus particulièrement l'arbre de pignon 42, est relié à l'arbre de sortie 60 par un deuxième accouplement 72. Ce deuxième accouplement 72 transmet une rotation de l'arbre de sortie 60 à l'arbre de pignon 42 et donc au pignon d'entraînement 40. L'arbre de sortie 60 est relié à l'arbre de pignon 42 par le deuxième accouplement 72 sans l'intermédiaire d'un étage de réduction.

Le deuxième accouplement 72 est configuré de sorte que le deuxième axe 46 et le troisième axe 70 sont sensiblement alignés. Le deuxième accouplement 72 a au moins un degré de liberté permettant un désalignement radial et/ou angulaire entre le deuxième axe 46 et le troisième axe 70 pendant la rotation.

Selon une variante préférée, le désalignement radial maximal entre le deuxième axe 46 et le troisième axe 70 accepté par le deuxième accouplement 72, lors de la transmission de la rotation de l'arbre de sortie 60 au pignon d'entraînement 40, est d'au moins 0,1 mm, plus préférentiellement d'au moins 0,5 mm, encore plus préférentiellement d'au moins 1 mm.

Selon une autre variante préférée, le désalignement angulaire maximal entre le deuxième axe 46 et le troisième axe 70 accepté par le deuxième accouplement 72, lors de la transmission de la rotation de l'arbre de sortie 60 au pignon d'entraînement 40, est d'au moins 0,1°, plus préférentiellement d'au moins 0,5°, encore plus préférentiellement d'au moins 1°.

Un accouplement utilisable en tant que deuxième accouplement 72 et permettant le désalignement requis par le dispositif 10, 210 est connu en tant que tel de l'état de la technique. Il s'agit par exemple d'un accouplement de type joint de cardan, d'un accouplement à ressort, d'un accouplement à denture ou d'un accouplement élastique comprenant des ressorts ou une portion en caoutchouc.

De préférence, le deuxième accouplement 72 est situé à l'extérieur des volumes internes 66, 68 définis d'une part par le carter de réducteur 62 et d'autre part par le carter secondaire 44. Ainsi, le deuxième accouplement 72 est facilement accessible pour des opérations de montage ou d'entretien.

Préférentiellement, le deuxième accouplement 72 est muni de moyens d'ajustement de sa rigidité en torsion. Le deuxième accouplement 72 est par exemple un accouplement, notamment à denture, équipé d'un premier arbre de torsion dont la rigidité en torsion est moins importante que la rigidité en torsion de l'arbre de pignon 42 et de l'arbre de sortie 60. Ainsi, le comportement dynamique de la liaison entre l'arbre de sortie 60 et l'arbre de pignon 42 est influencé par l'arbre de torsion.

Par ailleurs, le premier arbre de torsion peut être échangé par un deuxième arbre de torsion dont la rigidité en torsion est différente de celle du premier arbre de torsion. La section et la longueur de chaque arbre de torsion sont donc choisies et ajustées pour modifier sa raideur.

Préférentiellement, le deuxième accouplement 72 est apte à se rompre en cas d'application d'un couple de torsion supérieur à un seuil prédéterminé, entre l'arbre de sortie 60 et l'arbre de pignon 42 ou le pignon d'entraînement 40. Selon une variante, le deuxième accouplement 72 est équipé de moyens de mesure du couple de torsion entre l'arbre 60 et le pignon d'entraînement 40. Ces moyens de mesure du couple de torsion comprennent par exemple des jauges de déformation.

Préférentiellement, le deuxième accouplement 72 est équipé d'un système de débrayage. Ainsi, le pignon d'entraînement 40 peut être désaccouplé de manière réversible d'avec l'arbre de sortie 60.

Dans les exemples des figures 1 à 3, chaque unité d'entraînement 48 est associée à un seul pignon d'entraînement 40 et chaque réducteur 32 comporte un seul arbre de sortie 60, 160. Selon une variante non représentée, un réducteur 32 permet une division de couple du moteur 50 ; plus précisément, le réducteur 32 comporte un arbre d'entrée et au moins deux arbres de sortie, mobiles en rotation selon des axes préférentiellement verticaux. Une unité d'entraînement 48 comprenant un tel réducteur 32 peut ainsi entraîner en rotation au moins deux pignons d'entraînement 40.

La puissance du dispositif d'entraînement 10, 110, 210 dépend notamment du nombre d'ensembles pignon d'entraînement 40 / unité d'entraînement 48. En augmentant ce nombre, il est possible d'obtenir une puissance élevée, notamment supérieure à 746kW (1000 HP), en utilisant des moteurs 50 de taille modérée, sans augmenter significativement l'encombrement du dispositif d'entraînement 10, 110, 210.

Un procédé de fonctionnement du dispositif d'entraînement 10 et du broyeur agitateur vertical 11 de la figure 1 va maintenant être décrit. Le ou les moteurs 50 sont mis en fonctionnement, ce qui entraîne en rotation l'arbre de sortie ou les arbres de sortie 60 de la ou de chaque unité d'entraînement 48. L'arbre ou chaque arbre de sortie 60 entraîne en rotation un pignon d'entraînement 40. Ledit pignon d'entraînement 40 engrène avec la couronne dentée 38, entraînant le plateau rotatif 34 en rotation selon le premier axe 14.

L'outil de broyage rotatif 13, solidaire du plateau rotatif 34, est ainsi entraîné en rotation autour de l'axe 14. L'entraînement en rotation de l'outil de broyage 13 dans la cuve 12 permet des opérations de broyage par agitation.

Le dispositif d'entraînement 10 permet la reprise de tous les efforts agissant sur l'outil de broyage 13, par la butée axiale 36 et éventuellement par le palier radial 32. En particulier, tous les efforts de broyage, lors d'un broyage à une puissance nominale du broyeur 11, sont repris par la butée axiale 36 et éventuellement par le palier radial 32.

La structure du dispositif d'entraînement 10 et du broyeur 11 décrits ci-dessus permet la reprise d'efforts très importants de broyage pour des dimensions données.

Dans le cas où le dispositif 10 comprend plusieurs ensembles pignon d'entraînement 40 / unité d'entraînement 48, les différents moteurs 50 peuvent être mis en fonctionnement les uns après les autres afin d'augmenter progressivement la puissance fournie à la couronne dentée 38 au moment du démarrage.

Dans le cas où les deuxièmes accouplements 72 sont débrayables, il est possible de désactiver certaines unités d'entraînement 48 lorsque le fonctionnement du broyeur 11 nécessite une faible puissance. Il est ainsi possible de diminuer le nombre de moteurs 50 en service, afin de faire fonctionner ces moteurs dans une plage de puissance pour laquelle leur rendement énergétique est optimal.

Un deuxième accouplement 72 débrayable facilite également des opérations de maintenance sur le pignon d'entraînement 40 et/ou sur l'unité d'entraînement 48.

Dans le cas où le deuxième accouplement 72 est muni de moyens d'ajustement de sa rigidité en torsion, il est possible d'ajuster sa raideur pour modifier les modes de torsion dépendant de la chaîne cinématique, du moteur et du broyeur. Ces modifications peuvent être réalisées en amont de la fabrication ou *a posteriori* après la mise en service du matériel.

Dans le cas où le deuxième accouplement 72 est apte à se rompre en cas d'application d'un couple de torsion supérieure à un seuil prédéterminé, le deuxième accouplement 72 fait office de « fusible » en évitant la rupture d'une autre pièce, plus chère ou moins facile à changer.

Les dispositifs 110, 210 décrits ci-dessus peuvent être utilisés à la place du dispositif 10 pour être intégrés au broyeur agitateur 11.

Les dispositifs 10 et 210 des figures 1 et 3 ont notamment les avantages suivants : Le deuxième accouplement 72 reprend les défauts d'alignement entre le pignon d'entraînement 40 et l'arbre de sortie 60. Le montage et la fabrication du réducteur 56 peuvent donc avoir lieu avec des grandes tolérances. Par ailleurs, un grand nombre de pignons d'entraînement 40 peuvent être montés sur le carter principal 24 à une position déterminée, sans nécessiter de réglages fastidieux de la position des unités d'entraînement 48 associées à chacun des pignons. De plus, les exigences du dispositif concernant le fondement ou l'encombrement sont faibles.

Le dispositif 110 de la figure 2 a notamment l'avantage de permettre un plus faible encombrement vertical que les deux autres modes de réalisation, en solidarisant l'arbre de pignon 42 et l'arbre de sortie 160 sans passer par un accouplement 72.

D'une manière générale, les dispositifs d'entraînements décrits ci-dessus et les broyeurs comprenant de tels dispositifs permettent d'obtenir des puissances d'entraînement élevées avec un encombrement vertical beaucoup plus faible que les broyeurs agitateurs de grande puissance connus de l'état de la technique. L'installation et la maintenance en sont ainsi facilitées.

## Revendications

1. Broyeur agitateur vertical (11), comprenant une cuve de broyage (12) et un outil de broyage (13) rotatif par rapport à ladite cuve selon un premier axe vertical (14), l'outil de broyage rotatif étant disposé dans la cuve de broyage,
ledit broyeur comprenant en outre un dispositif d'entraînement (10, 110, 210), ledit dispositif d'entraînement comprenant :
- un carter principal (24) ;
- un moteur (50) ; et
- un élément rotatif (28) par rapport au carter principal, autour du premier axe vertical (14), l'élément rotatif étant apte à être entraîné en rotation par ledit moteur ;
l'élément rotatif comportant un plateau rotatif (34) sensiblement perpendiculaire au premier axe;
dans lequel :
- le carter principal comprend une butée axiale (36) apte à guider axialement l'élément rotatif et à limiter un déplacement axial vers le bas dudit élément rotatif ;
- le plateau rotatif est disposé en appui sur ladite butée axiale, la butée axiale étant ainsi apte à reprendre les efforts axiaux s'exerçant sur l'outil de broyage rotatif durant un fonctionnement du broyeur agitateur vertical ;
- l'élément rotatif (28) est fixé à une extrémité supérieure (22) de l'outil de broyage rotatif et le carter principal (24) du dispositif d'entraînement est fixé à la cuve de broyage et disposé au-dessus de ladite cuve ; et
- l'élément rotatif comporte :
- une couronne dentée de sortie (38), solidaire d'une périphérie du plateau rotatif ;
- une partie cylindrique (29) disposée selon le premier axe, une extrémité supérieure de ladite partie cylindrique étant solidaire du plateau rotatif (34), une extrémité inférieure (30) de ladite partie cylindrique étant fixée ou apte à être fixée à l'outil de broyage rotatif (13) du broyeur agitateur vertical ;
- le dispositif d'entraînement comporte :
- un premier pignon d'entraînement (40) engrenant ou apte à engrener avec la couronne dentée de sortie (38), le premier pignon d'entraînement (40) étant mobile en rotation autour d'un deuxième axe (46) ; et
- une première unité d'entraînement (48), adaptée pour entraîner en rotation le premier pignon d'entraînement (40),
la première unité d'entraînement comprenant le moteur (50) et un arbre de sortie (60, 160), l'arbre de sortie étant mobile en rotation autour d'un troisième axe (70).
-

2. Broyeur agitateur vertical selon la revendication 1, dans lequel la butée axiale (36) du carter principal est choisie parmi un palier axial, notamment hydrostatique ou hydrodynamique, et une butée à éléments roulants.

3. Broyeur agitateur vertical selon la revendication 1 ou la revendication 2, dans lequel le carter principal comprend un palier radial (32) apte à guider radialement l'élément rotatif (28) et à reprendre les efforts radiaux s'exerçant sur l'outil de broyage rotatif durant un fonctionnement du broyeur agitateur vertical.

4. Broyeur agitateur vertical selon l'une des revendications précédentes, dans lequel le premier pignon d'entraînement (40) est relié à l'arbre de sortie de la première unité d'entraînement par un dispositif d'accouplement (72) tel que le deuxième (70) et le troisième (46) axes sont sensiblement alignés, ledit dispositif d'accouplement (72) ayant au moins un degré de liberté permettant un désalignement entre le deuxième et le troisième axes lors de la transmission de la rotation de l'arbre de sortie au pignon d'entraînement.

5. Broyeur agitateur vertical selon la revendication 4, dans lequel le dispositif d'accouplement (72) comporte un système de débrayage pour désaccoupler de manière réversible le pignon d'entraînement et l'arbre de sortie de l'unité d'entraînement.

6. Broyeur agitateur vertical selon l'une des revendications 1 à 3, dans lequel le premier pignon d'entraînement (40) comporte un arbre de pignon (42) monté fixe par rapport à l'arbre de sortie (160) de l'unité d'entraînement (48) associée.

7. Broyeur agitateur vertical selon l'une des revendications précédentes, comprenant en outre un deuxième pignon d'entraînement (40), ledit deuxième pignon étant associé à une deuxième unité d'entraînement (48), lesdits premiers et deuxièmes pignons d'entraînement et unités d'entraînement étant répartis angulairement autour du premier axe.

8. Broyeur agitateur vertical selon l'une des revendications précédentes, dans lequel une extrémité inférieure de l'outil de broyage rotatif (13) est située à distance de parois de la cuve de broyage (12), non soutenue par lesdites parois, de sorte que le poids dudit outil de broyage (13) est intégralement repris par le dispositif d'entraînement (10, 110, 210).

## Patentansprüche

1. Vertikaler Rühr-Zerkleinerer (11) mit einem Rührbehälter (12) und einem Rührwerkzeug (13), das bezüglich des Rührbehälters (12) entlang einer vertikalen Achse (14) drehbar ist,
wobei das drehbare Rührwerkzeug in dem Rührbehälter angeordnet ist,
wobei der Zerkleinerer aufweist eine Vorrichtung zum Antrieb (10, 110, 210), wobei die Vorrichtung aufweist:
- ein Hauptgehäuse (24),
- einen Motor (50) und
- ein bezüglich des Hauptgehäuses um eine erste vertikale Achse (14) drehbares Element (28), wobei das drehbare Element imstande ist, von dem Motor drehantrieben zu werden, wobei das drehbare Element aufweist eine drehbare Platte (34), die im Wesentlichen senkrecht zur ersten Achse ist,
wobei das Hauptgehäuse aufweist einen axialen Anschlag (36), der imstande ist, das drehbare Element axial zu führen und eine axiale Verlagerung nach unten des drehbaren Elements zu begrenzen,
wobei die drehbare Platte in Anlage gegen den axialen Anschlag angeordnet ist, wobei der axiale Anschlag dadurch imstande ist, die axialen Kräfte, die während eines Betriebs des vertikalen Rühr-Zerkleinerers auf das drehbare Zerkleinerungswerkzeug ausgeübt werden, aufzunehmen,
wobei das drehbare Element (28) der Vorrichtung zum Antrieb an einem oberen Ende (22) des drehbaren Rührwerkzeugs befestigt ist und wobei das Hauptgehäuse (24) der Vorrichtung zum Antrieb an dem Zerkleinerungsbehälter befestigt ist und über dem besagten Behälter angeordnet ist,
wobei das drehbare Element aufweist:
- einen gezahntes Ausgangs-Hohlrad (38), der an einem Umfang der drehbare Platte befestigt ist,
- einen zylindrischen Teil (29), der entlang der ersten Achse angeordnet ist, wobei ein oberes Ende des zylindrischen Teils fest mit der drehbaren Platte (34) verbunden ist, undein unteres Ende (30) des zylindrischen Teils an dem drehbaren Zerkleinerungswerkzeug (13) des vertikalen Rühr-Zerkleinerers befestigt oder befestigbar ist,
wobei die Vorrichtung aufweist:
- ein erstes Antriebsritzel (40), das mit dem gezahnten Ausgangs-Hohlrad (28) im Eingriff steht oder imstande ist, mit diesem im Eingriff zu stehen, wobei das Antriebsritzel (40) um eine zweite Achse (46) drehbar ist, und
- eine erste Antriebseinheit (48), wobei die Antriebseinheit angepasst ist zum Drehantreiben des Antriebsritzels (40),
wobei die Antriebseinheit den Motor (50) und eine Ausgangswelle (60, 160) aufweist, wobei die Ausgangswelle um eine dritte Achse (70) drehbar ist.

2. Vertikaler Rühr-Zerkleinerer gemäß Anspruch 1, wobei der axiale Anschlag (36) des Hauptgehäuses ausgewählt ist aus einem, insbesondere hydrostatischen oder hydrodynamischen, Axialwellenlager, und einem Anschlag aus Wälzelementen.

3. Vertikaler Rühr-Zerkleinerer gemäß Anspruch 1 oder Anspruch 2, wobei das Hauptgehäuse aufweist ein Radialwellenlager (32), das imstande ist, das drehbare Element (28) radial zu führen und die Radialkräfte, die während eines Betriebs des vertikalen Rühr-Zerkleinerers auf das drehbare Rührwerkzeug ausgeübt werden, aufzunehmen.

4. Vertikaler Rühr-Zerkleinerer gemäß einem der vorhergehenden Ansprüche, wobei das erstes Antriebszahnrad (40) mit der erste Antriebseinheit verbunden ist über eine Kopplungsvorrichtung (72), die derart ist, dass die zweite (70) und die dritte (46) Achse im Wesentlichen fluchten, wobei die Kopplungsvorrichtung (72) wenigstens einen Freiheitsgrad hat, der ein Nicht-Fluchten zwischen der zweiten und der dritten Achse erlaubt während des Übertragens der Drehung von der Ausgangswelle zu dem Antriebsritzel.

5. Vertikaler Rühr-Zerkleinerer gemäß Anspruch 4, wobei die Kopplungsvorrichtung (72) ein Ausschalt-System aufweist zum reversiblen Abkoppeln des Antriebsritzels und der Ausgangswelle der Antriebseinheit.

6. Vertikaler Rühr-Zerkleinerer gemäß einem der Ansprüche 1 bis 3, wobei das oder jedes Antriebszahnrad (40) eine Ritzel-Welle (42) aufweist, die bezüglich der Antriebswelle (160) der mit dieser verknüpften Antriebseinheit (48) fest montiert ist.

7. Vertikaler Rühr-Zerkleinerer gemäß einem der vorhergehenden Ansprüche, aufweisend ein zweites Antriebsritzel (40), wobei das zweites Ritzel mit einer zweite Antriebseinheit (48) verknüpft ist, wobei die erste und zweite Antriebsritzel und Antriebseinheiten um die erste Achse herum winkelverteilt sind.

8. Vertikaler Rühr-Zerkleinerer gemäß einem der vorhergehenden Ansprüche, wobei ein unteres Ende des drehbaren Rührwerkzeugs (13) im Abstand von Wänden des Zerkleinerungsbehälters (12) angeordnet ist, nicht-gestützt von diesen Wänden, sodass das Gewicht des besagten Rührwerkzeugs (13) ganz von der Vorrichtung zum Antrieb (10, 110, 210) aufgenommen wird.

## Claims

1. A vertical stirred mill (11), comprising a milling vat (12) and a rotary milling tool (13) rotating relative to said vat along a first vertical axis (14), the rotary milling tool being arranged in the milling vat,
said mill comprising a drive device (10, 110, 210), said drive device comprising:
- a main housing (24),
- a motor (50); and
- a rotary element (28) rotating relative to the main housing, around the first vertical axis (14), the rotary element being able to be rotated by said motor;
the rotary element including a rotary plate (34) substantially perpendicular to the first axis;
wherein :
- the main housing comprises an axial stop (36) able to guide the rotary element axially and limit a downward axial movement of said rotary element;
- the rotary plate is arranged bearing on said axial stop, the axial stop thus being able to react the axial forces exerted on the rotary milling tool during operation of the vertical stirred mill ;
- the rotary element (28) of the drive device is fastened to an upper end (22) of the rotary milling tool and the main housing (24) of the drive device is fastened to the milling vat and arranged above said vat ; and
- the rotaty element comprises :
- an output crown gear (38), secured to a periphery of the rotary plate ;
- a cylindrical part (29) arranged along the first axis, an upper end of said cylindrical part being secured to the rotary plate (34), a lower end (30) of said cylindrical part being secured or able to be secured to the rotary milling tool (13) of the vertical stirred mill,
- the drive device further includes:
- a first drive pinion (40) meshing or able to mesh with the output crown gear (38), the first drive pinion (40) being rotatable around the second axis (46); and
- a first drive unit (48), suitable for rotating the first drive pinion (40),
the first drive unit comprising the motor (50) and an output shaft (60, 160), the output shaft being rotatable around a third axis (70).

2. The vertical stirred mill according to claim 1, wherein the axial stop (36) of the main housing is chosen from among an axial bearing, in particular hydrostatic or hydrodynamic, and a stop with rolling elements.

3. The vertical stirred mill according to claim 1 or claim 2, wherein the main housing comprises a radial bearing (32) able to guide the rotary element (28) radially and react the radial forces exerted on the rotary milling tool during operation of the vertical stirred mill.

4. The vertical stirred mill according to one of the previous claims, wherein the first drive pinion (40) is connected to the output shaft of the first drive unit by a coupling device (72) such that the second (70) and third (46) axes are substantially aligned, said coupling device (72) having at least one degree of freedom allowing a misalignment between the second and third axes during the transmission of the rotation from the output shaft to the drive pinion.

5. The vertical stirred mill according to claim 4, wherein the coupling device (72) includes a disengagement system to reversibly uncouple the drive pinion and the output shaft from the drive unit.

6. The vertical stirred mill according to one of claims 1 to 3, wherein the first drive pinion (40) includes a pinion shaft (42) mounted fixed relative to the output shaft (160) of the associated drive unit (48).

7. The vertical stirred mill according to one of the preceding claims, also comprising a second drive pinion (40), said second drive pinion being associated with a second drive unit (48), said first and second drive pinions and drive units being distributed angularly around the first axis.

8. The vertical stirred mill according to one of the previous claims, wherein a lower end of the rotary milling tool (13) is situated at a distance from the walls of the milling vat (12), not supported by said walls, so that a weight of said milling tool (13) is completely reacted by the drive device (10, 110, 210).
